**Europäisches Patentamt**

**European Patent Office**

**Office européen des brevets**

(11) Veröffentlichungsnummer: **0 365 623 B1**

# (12) EUROPÄISCHE PATENTSCHRIFT

(45) Veröffentlichungstag der Patentschrift: **06.10.93**

(51) Int. Cl.5: **C09K 5/06**

(21) Anmeldenummer: **89903694.1**

(22) Anmeldetag: **24.03.89**

(86) Internationale Anmeldenummer:
**PCT/DE89/00191**

(87) Internationale Veröffentlichungsnummer:
**WO 89/09249 (05.10.89 89/24)**

(54) **PHASENWECHSELMATERIAL ZUR SPEICHERUNG VON WÄRME ALS UMWANDLUNGSWÄRME.**

(30) Priorität: **30.03.88 DE 3810838**

(43) Veröffentlichungstag der Anmeldung:
**02.05.90 Patentblatt 90/18**

(45) Bekanntmachung des Hinweises auf die Patenterteilung:
**06.10.93 Patentblatt 93/40**

(84) Benannte Vertragsstaaten:
**DE FR GB SE**

(56) Entgegenhaltungen:
**EP-A- 257 001**
**AU-A- 538 433**
**US-A- 4 283 298**

**CHEMICAL ABSTRACTS, Band 98, 1983, Columbus, Ohio, US; Seite 176, Nr. 201423n; & JP-A-57 55 746**

(73) Patentinhaber: **Bayerische Motoren Werke Aktiengesellschaft**
**Patentabteilung AJ-3**
**D-80788 München(DE)**

Patentinhaber: **Längerer & Reich GmbH & Co.**

**D-70790 Filderstadt(DE)**

(72) Erfinder: **Malatidis, Nikolaos, Dr.**
**verstorben**
**(DE)**

EP 0 365 623 B1

## Beschreibung

Die Erfindung bezieht sich auf ein sogenanntes Phasenwechselmaterial zur Speicherung von Wärme als Umwandlungswärme. Diese aus irgendeinem Energiesystem stammende Wärme wird genutzt, indem sie gespeichert und im Bedarfsfalle aus dem Speicher abgerufen werden kann. Zu dieser Art von Wärmelieferanten gehören z. B. die solare Strahlungsenergie, die Abwärme irgendwelcher Maschinen, z. B. von Kraftfahrzeugmotoren, Prozeßwärme oder auch die billigere elektrische Energie in den Nachtstunden (Nachtstrom).

Es ist bekannt, daß beim Schmelzen einer Substanz, d. h. beim Übergang von der festen in die flüssige Phase, Wärme verbraucht, d. h. aufgenommen wird, die, solange der flüssige Zustand bestehen bleibt, latent gespeichert wird, und daß diese latente Wärme beim Erstarren, d. h. beim Übergang von der flüssigen in die feste Phase, wieder frei wird. Wichtig ist es nun, Materialien zu finden, deren Schmelztemperatur in einem Bereich liegt, der dem Temperaturniveau der angebotenen Wärme entspricht. So ist es z. B. wünschenswert, daß für die Speicherung der Motorabwärme von Kraftfahrzeugen die Schmelztemperatur der Phasenwechselmaterialien bei ca. 75°C liegt.

Aus Chemical Abstracts, Band 98, 1983, Seite 176, Nr. 201423n geht ein Phasenwechselmaterial aus einem Gemisch von 17 Mol-% Magnesiumnitrathexahydrat und Lithiumnitrattrihydrat hervor, das eine geringe Menge eines wasserunlöslichen Materials zur Keimbildung enthält, um einen unterkühlten flüssigen Zustand zu verhindern. Der Schmelzpunkt dieses Gemischs liegt bei 20°C. D. h., er ist viel zu niedrig, um dieses Gemisch z. B. als Phasenwechselmaterial zur Speicherung der Motorabwärme in Kraftfahrzeugen verwenden zu können.

US-A-4 283 298 beschreibt ein Phasenwechselmaterial aus 61,5 Gew.-% Magnesiumnitrathexahydrat und 38,5 Gew.-% Ammoniumhydrat mit einer geringen Menge eines Keimbildungsmaterials, das eine Schmelztemperatur von 52°C besitzt. Auch diese Schmelztemperatur liegt noch zu weit unter der von etwa 75°C, die z. B. für die Speicherung der Motorabwärme verlangt wird.

Bei Kraftfahrzeugwärmespeichern wird wegen der möglichen Temperaturen des Kühlwassers erwartet, daß die Schmelztemperatur des Phasenwechselmaterials bei 75°C liegt, und daß das Phasenwechselmaterial bis 125°C aufheizbar ist, ohne zerstört zu werden. Ferner darf das Material nicht ätzend und nicht korrosiv sein und muß eine hohe Kristallisations- bzw. Schmelz-Enthalpie haben.

Aufgabe der Erfindung ist es, ein Phasenwechselmaterial zur Verfügung zu stellen, das bei hoher Schmelz-Enthalpie und Temperaturbeständigkeit eine Schmelztemperatur von etwa 75°C aufweist.

Dies wird erfindungsgemäß mit dem im Anspruch 1 gekennzeichneten Phasenwechselmaterial erreicht.

Zur Speicherung der Motorabwärme von Kraftfahrzeugen ist daher das Gemisch

$$Mg(NO_3)_2 \cdot 6H_2O + LiNO_3$$

mit einem Mischungsverhältnis von 92:8 - 87:13 verwendbar. Bei 100 g Gemisch mit 92 ... 87 g $Mg(NO_3)_2 \cdot 6H_2O$ und 8 ... 13 g $LiNO_3$ erreicht man eine Schmelztemueratur von 70°C.

Dieses Gemisch hat nämlich folgende Eigenschaften:

| Schmelztemperatur: | $T_s = (70 +/-2)°C$ |
|---|---|
| Dichte: | $\rho = 1{,}652 \ kg/(dm)^3$ |
| Schmelzwärme: | $H = 54{,}32 \ Wh/kg$ |
| Spez. Wärme (flüssig): | $cp_{fl} = 0{,}873 \ Wh/kg \cdot K$ |
| Spez. Wärme (fest): | $cp_f = 0{,}553 \ Wh/kg \cdot K$ |

Die Wärme, die in 10 kg Phasenwechselmaterial bei einer Temperatur von 90°c gespeichert werden kann, setzt sich zusammen aus:

- dem latenten Anteil:

$$Q_1 = 10 \cdot 54{,}32 = 543.2 \ Wh \ (bei \ 70 \pm 2°C),$$

- dem sensiblen Anteil (flüssige Phase):

$$Q_{s(fl)} = 10 \cdot 0{,}873 \cdot 20 = 174{,}6 \ Wh$$

2

(zwischen 70 °C - 90 °C)
- dem sensiblen Anteil (feste Phase):

$Q_{s(f)} = 10 \cdot 0{,}553 \cdot 15 = 82{,}92$ Wh

(zwischen 55 °C - 70 °C)
Die gesamte Wärme beträgt:

$Q_g = 800{,}75$ Wh.

**Patentansprüche**

1. Phasenwechselmaterial zur Speicherung und Nutzung von Wärme als Umwandlungswärme, dadurch gekennzeichnet, daß es aus einem Gemisch von Magnesiumnitrathexahydrat ($Mg(NO_3)_2 \cdot 6H_2O$) und Lithiumnitrat ($LiNO_3$) in einem Mischungsverhältnis von 92:8 bis 87:13 bezogen auf die Masse, besteht.

2. Verwendung des Phasenwechselmaterials nach Anspruch 1 zur Speicherung der Motorabwärne von Kraftfahrzeugen.

**Claims**

1. A phase-transition material for the storage and retrieval of heat as the latent heat of transformation, characterised in that it comprises a mixture of magnesium nitrate hexahydrate ($Mg(NO_3)_2 \cdot 6H_2O$) and lithium nitrate ($LiNO_3$) at a mixture ratio of 92:8 to 87:13 relative to mass.

2. The use of the phase-transition material according to Claim 1 for the storage of engine heat from motor vehicles.

**Revendications**

1. Matériau à transition de phase pour accumuler et utiliser la chaleur comme chaleur de transformation, caractérisé en ce qu'il consiste en un mélange de nitrate-hexahydrate de magnésium ($Mg(NO_3)_2.6H_2O$) et de nitrate de lithium ($LiNO_3$) selon une proportion de 82:8 à 87:13 de la masse.

2. Application du matériau à transition de phase selon la revendication 1 à l'accumulation de la chaleur des moteurs de véhicules automobiles.